# EUROPEAN PATENT APPLICATION

(11) **EP 1 022 104 A1**
(43) Date of publication of application: **26.07.2000**
(21) Application number: 00200253.3
(22) Date of filing: 25.01.2000
(51) Int. Cl.: B29B 7/74, B29B 7/76

(54) **Movable apparatus for the dispensing of foam**

(30) Priority: 25.01.1999 EP 99200207
(71) Applicant: Sealed Air S.p.A., 20040 Bellusco, Milano (IT)
(72) Inventor: Scatasta, Pieremidio, 20043 Arcore (MI) (IT); Rossetto, Luca, 35010 Trebaseleghe (PD) (IT)
(74) Representative: Checcacci, Giorgio

(57) **Abstract**

A movable apparatus (1) for the dispensing of foam, i.e. polyurethane foam, comprising two containers (27) for two different chemical components suitable to form the foam, a first means (28, 31) for supplying the chemical components into a mixing chamber in order to form a mixed solution thereof, and a second means (29) for dispensing the mixed solution into an appropriate dispensing location. The apparatus (1) is housed on a motor-operated movable vehicle (2) so as to be brought within close proximity of the dispensing location. Said first means (28, 31), said second means (29) and said movable vehicle (2) are provided on a fully self-contained system (100). The apparatus further comprises a cordless power-pack system (7, 7a, 18, 19, 20) including a first battery system (7) for providing power for vehicle motion and a second battery system (18) for providing power for foam dispensing.

## Description

### Field of the invention

The present invention relates to a movable apparatus for the dispensing of foam. The invention, in particular, allows the dispensing of foam, i.e. polyurethane foam, in places which would not be easily accessible with a conventional foam dispensing equipment, i.e. inside containers, rail wagons or boats, or any place where electricity or air are not readily available, so as, for example, to protect objects packed therein from breakage or damage during transport or stocking operations.

### Background of the invention

The necessity to protect objects via total encapsulation or blocking and bracing during transport is well known. With this regard, a particularly effective means of obtaining this protection can be achieved by packing said objects in polyurethane foam.

Packaging polyurethane foam dispensing systems are well known. They consist of air or electrically operated work-stations, which are comprised of a means of pumping two different chemical components, (normally a polyol resin and a polyisocianate) from their respective containers to a mixing chamber via usually heated flexible conduits. A dispenser, at the end of the heated conduits, holds the mixing chamber and provides the means of controlling the flow of the mixed polyurethane foam. Once dispensed, the polyurethane foam rises and solidifies creating a protective cushion.

The means of supplying the chemical components to the mixing chamber is comprised of two electric or air pumps. The pumps transport the chemical components from their containers via the two flexible resistance heated conduits to the mixing chamber.

The dispenser holds the mixing chamber and actuates its opening and closing by either air or electrical means, thus controlling the flow of the polyurethane foam (see for instance the dispenser described in US-A-5,590,816 or US-A-5,709,317).

The mixed solution is dispensed inside a bag or onto a sheet of high resistance plastic film, which protects the objects being shipped from the rapidly reacting and solidifying polyurethane foam therein.

There are several techniques used in shipping to protect goods, i.e. cushioning, blocking and bracing or void filling the empty places around the objects. All these techniques require that the object to be packed be brought in close proximity of the Polyurethane Dispensing Equipment.

US 4,809,909 discloses an apparatus for manufacturing rigid urethane structures form reactive components, including a source of a first component, a source of a second component, a sprayer for mixing the components and for dispensing the mixture therefrom, and a delivery system for delivering the components to the sprayer, wherein the delivery system is designed to continuously recirculate the components from their respective sources to the sprayer and back to the sources and includes positive displacement piston pumps simultaneously driven by a single motor. The system further includes means for calibrating the rates of flow of the components in the delivery system.

GB 878,368 discloses an apparatus for dispensing polyurethane-forming materials which comprises an electric (or compressed air) motor provided with driving means coupled to a plurality of flexible drives suitable for imparting rotary motion through gearing of predetermined ratios and a plurality of pumping units each comprising a tank containing a pump installed so as to be permanently submerged in the liquid held in the tank. The pump are provided with a drive coupling mounted on the lid of said tank and adapted to couple with one of said flexible drives.

US 5,344,051 discloses a polyurethane foam dispensing apparatus including two replaceable containers storing the liquid foam component of the foam in a pressurized state. The containers are held within a carrier assembly and interconnected to a dispenser by way of a pair of flexible material supply tubes. The apparatus includes an actuating assembly by which supply container valves may be opened in unison.

US 5,526,957 discloses an apparatus for dispensing a foam including a first master container having at least one flexible wall product container and a head space between the product container and the first master container, a gas-generating apparatus including a second master container receiving a first fluent substance and a second fluent substance in a second container and a product dispensing gun including valves for controlling liquid and gas flow therethrough, with fluid-tight connections arranged to permit fluid flow from the product container to the gun and gas flow from the second master container to the first master container and to the gun.

EP 0 326 510 discloses an apparatus for metering and pumping multicomponents of high and low viscosity materials and subsequently mixing and applying such mixture, including gear pumps for pumping each component and operated by an electric motor. The gear pumps are simultaneously driven at a predetermined speed and each gear pump is designed to pump a predetermined amount of its respective components, at the predetermined speed. The gear pumps may be driven at the same rotational speed but are designed to pump a predetermined amount of the different materials so that the ratio of materials can be precisely set.

Sometimes it would be desirable to provide the means of protective packaging, i.e. polyurethane foam, inside containers, rail wagons, boats or any place where the lack of electricity or air prohibit the use of traditional polyurethane dispensing systems.

### Summary of the invention

Therefore, the present invention relates to a movable apparatus for the dispensing of foam, comprising two containers for two different chemical components suitable to form a foam, a first means for supplying the chemical components into a mixing chamber in order to form a mixed solution thereof, a second means for dispensing the mixed solution into an appropriate dispensing location, wherein the apparatus is housed on a movable vehicle so as to be brought within close proximity of the dispensing location, characterized in that said first and second means and said movable vehicle are provided on a fully self-contained system.

Advantageously, the apparatus is housed within a compact, self propelled vehicle which allows the apparatus to be brought within close proximity to any object which needs protective packaging regardless of location, especially those which are not easily reachable with conventional foam dispensing work-stations, i.e. inside containers, rail wagons or boats, where cushioning, void filling or blocking and bracing of fragile objects could be required. More advantageously, the apparatus is provided on a system which is fully self-contained in normal operation, i.e. which is able to operate without either electric power or air; in particular, both the vehicle motion and the foam dispensing are carried out without either electric power or air.

Preferably, the movable vehicle comprises a motor for vehicle motion, which allows an operator to easily drive and locate the vehicle as close as possible to the dispensing location. More preferably, the apparatus of the invention comprises a cordless power-pack system providing power for both foam dispensing and vehicle motion. Advantageously, the cordless power-pack system comprises a first battery system to provide power to the electric motor for vehicle motion, and a second battery system to provide a different amount of power to the foam supplying means. Therefore, the apparatus of the invention may be operated without a power cable so as to overcome any possible drawbacks related to the presence of a power cable for connection to an external electric network.

However, the apparatus can also be provided with a power cable for direct connection to the external electric network. This allows the apparatus to function in most situations including the scenario where the batteries have been depleted.

The dispensing system requires a substantial amount of power to operate; in most cases, conventional battery power supplies can not provide a sustainable amount of power to insure continued operation. Preferably, the apparatus second battery system comprises a plurality of 48 V batteries and an inverter, while the first battery system comprises two conventional 24 V batteries. The batteries of the second battery system provide a suitable amount of power to allow for "cordless" operation of the foam-dispensing portion of the apparatus for a reasonable length of time, i.e. at least one full work shift. Therefore, the cordless power-pack system of the invention can automatically provide for the necessary power for foam dispensing and vehicle motion for an entire shift of operation.

Advantageously, the batteries of the first and second battery systems are of a rechargeable type; they may be recharged during off hours or at night to insure readiness for operation the day after. The ability to recharge the battery power pack and the ability to operate via power cable to an external electric network allows this invention to operate in a continuous reliable manner.

In accordance with the present invention, the movable vehicle comprises a means for driving the vehicle. Preferably, the means for driving the vehicle comprises a driving arm/handle by which an operator can manually control the vehicle motion, specifically: starting, stopping and placement of the vehicle.

Advantageously, the means for supplying the chemical components from the containers to the mixing chamber of the dispenser comprises two flexible conduits with internal electric resistors for heating the components flowing therein before being mixed with the other component(s), each flexible conduit comprising a first end portion encircling a portion of a respective container and a second end portion connected to the dispensing means. In this way, the chemical components are pre-heated in their containers, before being pumped through the flexible conduits; this conserves energy and subsequently allows the system to operate in colder environments.

Preferably, the movable vehicle comprises several chambers or sections; in particular, it comprises a first section suitable to house the first battery system and the driving means, a second section suitable to house the second battery system, and a third section suitable to house the chemical component containers and the means for supplying and dispensing of the chemical components into the dispensing location. Advantageously, the second chamber or section is placed between the first and the third section and the power inverter is located under the batteries of the second battery system in close proximity of the chemical component containers, the first and the second section being in air communication with each other. Such airflow allows the air, preheated by the power inverter, to flow around the containers further pre-heating the chemical components provided in the containers.

Preferably, the chemical component containers are housed in a thermally insulated housing provided in the third chamber or section. This insulation is in place to maintain the temperature of the chemical components provided in the containers at the highest possible value before they are taken out for foam dispensing.

Preferably, the apparatus further comprises at least one resistor heating element located into the third section to help maintain an elevated temperature during cold environment operation.

Preferably, the apparatus of the present invention further comprises means for detecting the level of charge of the batteries of the second battery system.

Preferably, the apparatus of the present invention comprises a single electric connector for battery recharging. Advantageously, the connector can be operatively interfaced with a battery recharging device and with the batteries of the first and second battery system for recharging them. More advantageously, the connector is connected with the batteries of the second battery system, the batteries of the first battery system being operatively connected to the batteries of the second battery system, a transformer being interposed between the batteries of the first and of the second battery system in order to convert the 48 V power supplied by the second battery system into 24 V power for the first battery system. This allows the recharging of both the first and second battery systems with a single connection to the battery-recharging device.

### Brief description of the drawings

These and further features and advantages of the present invention will be more clearly apparent from the following detailed description of the preferred embodiments of the invention, made with reference to the enclose drawings, in which:
- figure 1 is a partially sectioned perspective view of the apparatus of the present invention;
- figure 2 is a perspective view of the apparatus of figure 1 from a different side;
- figure 3 is a side view of the apparatus with relation to figure 1; and
- figure 4 is a schematic view of a recharging circuit of the apparatus of figure 1.

### Detailed description of preferred embodiments of the invention

In the drawings 1-3, the no. 1 refers to the apparatus indicated for the dispensing of foam, i.e. polyurethane foam, according to the present invention. The apparatus 1 is particularly suitable to the dispensing of polyurethane foam into dispensing location which would not be easily accessible with a conventional foam dispensing work-station, i.e. inside containers, rail wagons or boats, so as, for example, to protect fragile objects provided therein, from breakage or damages during transport, storage and stocking operations.

The apparatus of the invention can also be used in the building field for dispensing polyurethane foam between adjacent panels in order to provide them with good thermal and acoustic insulation properties.

The apparatus 1 comprises a movable motor-operated vehicle 2, provided with an external box-shaped body 3, housing the packaging foam dispensing system, means for vehicle motion, and a cordless power-pack system providing power for foam dispensing and vehicle motion.

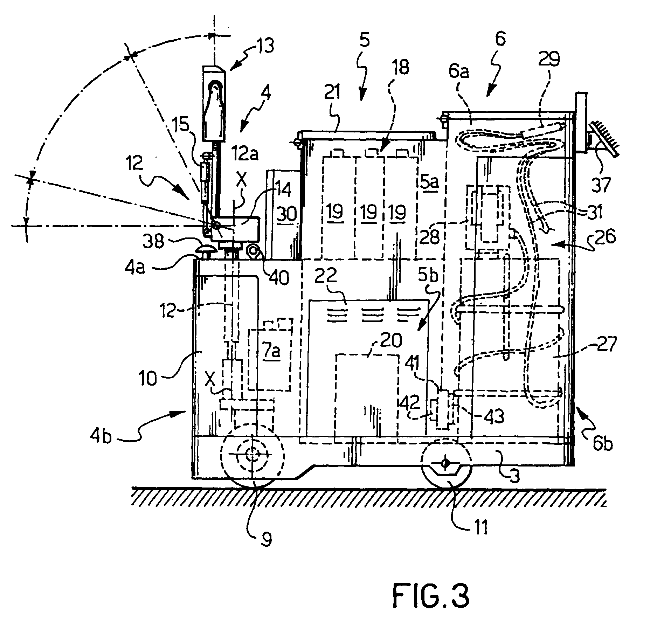

More particularly, the vehicle 2 comprises three chambers or sections. A first section 4 houses the means for the vehicle motion. A second and third section, indicated with 5 and 6 respectively, house the means for the foam dispensing. The second section 5 is interposed between the first and the third section (see figure 3).

The means for vehicle motion comprises a first battery system 7 suitable to power the drive motor and including two conventional rechargeable 24 V batteries, both indicated with 7a, located in a lower part 4b of the first section 4. An electric motor 8 is axially mounted on a driving wheel 9 centrally located at the bottom of the vehicle's first section 4. A lateral cover 10 is provided to access the batteries 7a.

The vehicle 2 also comprises two idle wheels 11 provided at the bottom of the second and third sections 5 and 6, allowing for stable vehicle motion.

The driving wheel 9 is connected to a driving arm/handle 12 which rotates around an axis X-X. This rotation allows the orientation of the driving wheel 9 during vehicle motion.

The driving arm 12 comprises an upper portion 12a which extends from an upper surface 4a, of the apparatus' first section 4 and includes a means for manual control 13. This manual control means 13 allows the operator to direct the wheel 9 and start/stop the electric motor 8.

The driving arm 12 further comprises a lower portion 12b connected to the driving wheel 9. The upper and lower portions 12a and 12b of the driving arm 12 are reciprocally connected by an intermediate arm 14, substantially perpendicularly mounted with respect to the X-X axis.

The upper portion 12a of the driving arm 12 pivots with respect to the intermediate arm 14 through the use of an elastic element, i.e. a pneumatic piston 15, which has been adapted to allow upper portion 12a to travel from a vertical to horizontal position. The position of the upper portion 12a corresponds directly with the operation of start and stop vehicle motion functions. The operator must move the upper portion 12a to a horizontal or intermediate position (between horizontal and vertical) to utilize the start/stop motion capabilities.

The means of manual control 13 comprises two opposite handles 16 which the operator grips with both hands. An emergency stop button 17 is provided to immediately stop the electric drive motor 8.

The second section 5 of the vehicle 2 comprises an upper housing 5a for a second battery system 18, which includes a plurality of rechargeable 48 V batteries, all indicated by the no. 19, suitable to provide power to the foam dispensing system. The second section 5 of the vehicle 2 further comprises a lower housing 5b which houses an inverter 20 suitable to convert 48 V supplied by the batteries 19 to a voltage suitable to power the foam dispensing portion of the apparatus.

The apparatus is therefore provided with a fully self-contained system 100 which is able to operate both the vehicle motion and the foam dispensing without either electric power or air.

The upper housing 5a for the 48 V batteries 19 includes a top cover 21 pivot mounted on to the external body 3 of the vehicle 2 to provide access to the batteries 19. The lower housing 5b in the area of the inverter 20 includes a side cover 22 which is removable from the external body 3 of the vehicle 2 to provide access to the inverter 20.

In an alternative embodiment, not illustrated, of the present invention, the upper housing 5a for the 48 V batteries 19 is closed by a lateral side cover to allow a drawer type positioning and extraction of the batteries 19 from their housing. This allows for the easy extraction of the discharged batteries 19 from the vehicle and subsequent installation of a fully charged set of replacement batteries 19, thus permitting continuous foam dispensing and mobile operations.

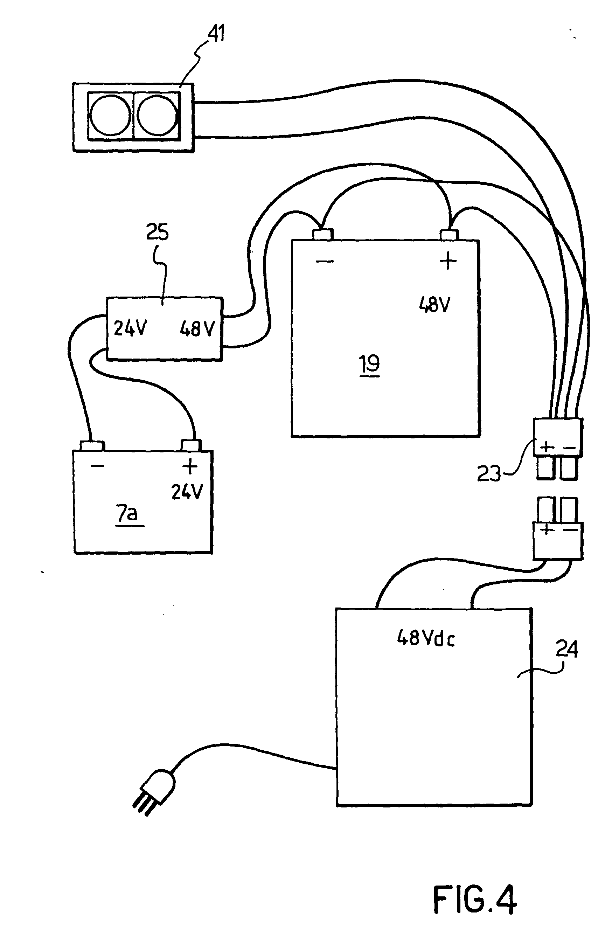

As mentioned above, batteries 7a and 19 of the first and second battery systems 7 and 18 are of a rechargeable type. Said recharging can be implemented by means of a single connection of an external electrical network powered recharging device 24 to a single connector 23, by the operator. The recharging device 24 will then charge batteries 7a and 19 of the first and second battery systems 7 and 18 (See figure 4). In particular, the connector 23 is connected by the operator with the battery recharging device 24 and with the 48 V batteries 19 of the second battery system 18; the 24 V batteries 7a of the first battery system 7 are connected to the 48 V batteries 19 of the second battery system 18 by a transformer 25 (not illustrated) which is connected between the batteries of the first and of the second battery systems 7 and 18 in order to convert the 48 V power of the second battery system 18 into 24 V power of the first battery systems 7. This allows the recharging of the first and second battery systems 7 and 18 by using a single connection to the battery-recharging device 24.

The cable with connector 23 is housed on the top of the 48 V batteries 19 to provide easy access for the operator.

In an alternative embodiment of the present invention, not illustrated, the apparatus 1 can also be provided with an electric cable for direct connection to the external electric network. This alternative means of supplying power is advantageous when the packaging location is easy to reach and/or the battery system is out of service, i.e. when the batteries 19 are discharged.

The third section 6 of the vehicle 2 comprises a thermally insulated housing 26 for two containers 27 of polyurethane chemical components (normally polyol resins and polyisocianates) to be mixed for subsequently forming the polyurethane foam.

The housing 26 for the containers 27 is provided in a lower region 6b of the third section 6 in close proximity of the power inverter 20 and is in air communication with the lower housing 5b of the second section 5, thus utilizing the heat energy given off of the power inverter 20 to prewarm the two containers 27.

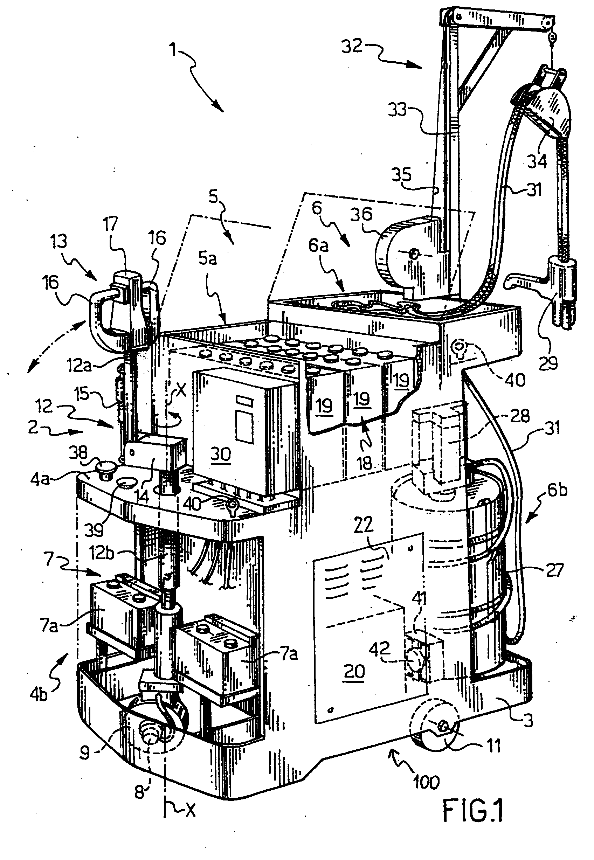

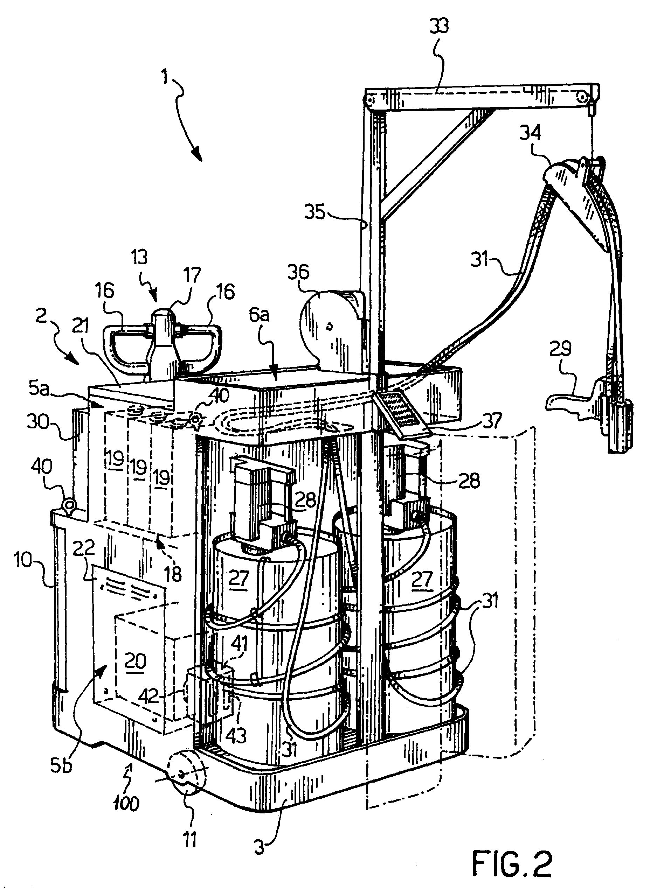

A 36 V resistor heating element 41 is provided in the lower region 6b of the third section 6. It is attached to the side wall between the second and the third section 5 and 6. It is preferably positioned in the middle of the side wall, in-between the two chemical component containers 27, facing toward the third section 6 for heating both the containers 27 to facilitate cold environment operation and optimum performance (for the sake of clarity, the resistor heating element 41 has been illustrated, in Fig.1 and 2, on one edge of the side wall). The resistor heating element 41 is comprised of one or two or more blower units 42 and a PTC resistor unit 43. A protective grill (not illustrated) is provided in front of the resistor unit 43 for protection against accidental contact. The resistor heating element 41 is adapted to be connected to the recharging device 24 via the connector 23 so as to operate during the apparatus recharging operation step (normally during off hours or at night to insure readiness for operation the day after) (see fig. 4). In an alternative embodiment (not illustrated) of the apparatus of the present invention, two resistor heating elements are provided, each one for heating a respective container 27.

Two electric pumps 28 are placed in the containers 27 for transporting the chemical components therein and supplying them to a mixing chamber portion of the dispenser 29. Said dispenser is of a conventional type, as disclosed in US-A-5,590,816 or US-A-5,709,317, therefore it will not be described in detail as a part of this description.

A standard system control console 30 is located in the first section 4 of the vehicle 2. It is connected to the electric pumps 28 and controls the movement of chemical components which are taken out from the containers 27 and supplied to the dispenser 29.

Two flexible conduits 31 convey the components from the pumps 28 to the mixing chamber of the dispenser 29. The flexible conduits 31 contain electric resistor heaters therein (not illustrated) for heating the chemical component flowing therein, before being mixed together at the mixing chamber. The flexible conducts 31 are housed in an upper region 6a of the third portion 6 of the vehicle 2 and are supported by conventional support means 32, adapted to facilitate the dispensing operation carried out by the operator. The support means 32 comprise a frame 33 for supporting the flexible conduits 31 and the dispenser 29. In particular, the flexible conduits 31 are fixed to a support 34, which is suspended by a cable retraction device 36 and a cable 35 in the upper region 6a of the third section 6 of the vehicle 2.

In the preferred embodiment of the invention, each flexible conduit 31 comprises a first end encircling a portion of a container 27 and a second end connected to the dispenser 29. In this way, the chemical components can be pre-heated before being supplied to the flexible conduits 31 in order to save energy and subsequently allow for better operation in colder environments and optimum performance.

A brush 37 is provided on the upper region 6a of the third section 6 of the vehicle 2, for cleaning the tip of the dispenser 29 after each or several dispensing operations.

A second emergency stop button 38 is provided on the upper surface 4a of the first section 4 of the vehicle 2 for the immediate stopping of the foam dispensing operation.

The apparatus of the invention also provides a detector (not illustrated) to show the level of charge of the 48 V batteries 19 and an indicator 39 of such level is provided on the upper surface 4a of the first section 4 of the vehicle 2.

The external body 3 of the vehicle 2 is made of a waterproof material. Hooks 40 are provided on the upper surface 4a of the first section 4 and on the upper region 6a of the third section 6 to allow the vehicle 2 to be lifted into proximity of the packaging place, should it not be accessible with the vehicle on the ground.

In operation, the mixed solution is dispensed inside a bag or onto a sheet of high resistance plastic film, which protects the objects being shipped from the rapidly reacting and solidifying polyurethane foam therein.

The vehicle 2 is driven by operator within close proximity of the packaging place. The dispensing operation can therefore be carried out in a conventional way for an extended period of time, i.e. a whole day. The recharging step for the batteries 7a and 19 can be carried out during off hours or at night so as to assure the apparatus 1 will be ready for a self-contained operation the following shift or day.

It will be assumed that numerous changes and modifications can be made to the embodiment described herein without departing from the spirit and scope of the invention.

## Claims

1. A movable apparatus (1) for the dispensing of foam, comprising two containers (27) for two different chemical components suitable to form a foam, a first means (28, 31) for supplying the chemical components into a mixing chamber in order to form a mixed solution thereof, a second means (29) for dispensing the mixed solution into an appropriate dispensing location, wherein the apparatus (1) is housed on a movable vehicle (2) so as to be brought within close proximity of the dispensing location, characterized in that said first means (28, 31), said second means (29) and the movable vehicle (2) are provided on a fully self-contained system (100).

2. An apparatus according to claim 1, wherein the movable vehicle (2) comprises an electric motor (8) for vehicle motion, the apparatus comprising a cordless power-pack system (7, 7a, 18, 19, 20) including a first battery system (7) to provide power to the electric motor (8) for vehicle motion and a second battery system (18) to provide a different amount of power to the foam supplying means (28, 31).

3. An apparatus according to claim 1, comprising an electric cable for direct connection to the external electric network.

4. An apparatus according to claim 2, wherein the second battery system (18) comprises a plurality of 48 V batteries (19) and an inverter (20).

5. An apparatus according to claim 2, wherein the batteries (7a, 19) of the first and second battery systems (7, 18) are of a rechargeable type.

6. An apparatus according to claim 1, wherein the movable vehicle (2) comprises means for driving the vehicle including a driving arm/handle (12) by which an operator can manually control the vehicle motion.

7. An apparatus according to claim 1, wherein the means (28, 31) for supplying the chemical components from the containers (27) to the mixing chamber comprises two flexible conduits (31) with internal electric resistors for heating the components flowing therein before being mixed with the other component(s), each flexible conduit encircling a portion of a respective container (27).

8. An apparatus according to claims 2 and 6, wherein the movable vehicle (2) comprises a first section (4), suitable to house the first battery system (7) and the driving means, a second section (5) suitable to house the second battery system (18), and a third section (6) suitable to house the containers (27) of chemical components and the means for supplying and dispensing the chemical components into the dispensing location.

9. An apparatus according to claims 4 and 8, wherein the second section (5) is placed between the first and the third section (4, 6) and the power inverter (20) is located under the batteries (19) of the second battery system (18) in close proximity of the chemical component containers (27), the first and the second section (4, 5) being in air communication with each other.

10. An apparatus according to claim 8, wherein the chemical component containers (27) are located in a thermally insulated housing (26) provided in the third section (6).

11. An apparatus according to claim 8, further comprising at least one resistor heating element (41) located into the third section (6).

12. An apparatus according to claim 4, comprising means for detecting the level of charge of the batteries (19) of the second battery systems (18).

13. An apparatus according to claim 5, comprising a single electric connector (23) which can be interfaced with a battery recharging device (24) and with the batteries (7a, 19) of the first and second battery systems (7, 18) for recharging them.

14. An apparatus according to claim 13, wherein the connector (23) is connected with the battery recharging device (24) and with the batteries (19) of the second battery system (18), the batteries (7a) of the first battery system (7) being operatively connected to the batteries (19) of the second battery system (18), a transformer being interposed between the batteries (7a, 119) of the first and of the second battery systems (7, 18).
